Europäisches Patentamt

European Patent Office

Office européen des brevets

(19)

(11) **EP 0 673 331 B1**

(12) **FASCICULE DE BREVET EUROPEEN**

(45) Date de publication et mention
de la délivrance du brevet:
**05.03.1997 Bulletin 1997/10**

(21) Numéro de dépôt: **94901991.3**

(22) Date de dépôt: **06.12.1993**

(51) Int Cl.⁶: **B64G 7/00**

(86) Numéro de dépôt international:
**PCT/FR93/01199**

**WO 94/13532 (23.06.1994 Gazette 1994/14)**

(54) **PROCEDE DE PILOTAGE D'UN AERONEF POUR AMELIORER UN ETAT DE MICROGRAVITE ET SYSTEME CORRESPONDANT**

**STEUERVERFAHREN EINES FLUGZEUGES UM EINEN MIKRO-SCHWERKRAFTZUSTAND ZU VERBESSERN UND ANGEMESSENES SYSTEM**

**AIRCRAFT PILOTING METHOD FOR IMPROVING A WEIGHTLESS CONDITION, AND SYSTEM THEREFOR**

(84) Etats contractants désignés:
**AT BE CH DE DK ES FR GB IE IT LI NL SE**

(30) Priorité: **08.12.1992 FR 9214757**

(43) Date de publication de la demande:
**27.09.1995 Bulletin 1995/39**

(73) Titulaire: **CENTRE NATIONAL D'ETUDES SPATIALES**
**75001 Paris (FR)**

(72) Inventeurs:
• **LEFEBVRE, Luc**
**F-31500 Toulouse (FR)**
• **MERCIER, Flavien**
**F-31520 Ramonville-S.-Agne (FR)**

(74) Mandataire: **Signore, Robert et al**
**c/o BREVATOME**
**25, rue de Ponthieu**
**75008 Paris (FR)**

(56) Documents cités:
**EP-A- 0 486 346**

## Description

### Domaine technique

La présente invention a pour objet un procédé de pilotage d'un aéronef pour améliorer un état de microgravité et un système correspondant. Ses applications sont celles de la microgravité : science des matériaux, sciences de la vie, tests de matériels destinés à l'astronautique, etc...

### Etat de la technique antérieure

On sait que l'on peut créer artificiellement un très faible niveau de pesanteur à l'intérieur d'un aéronef en plaçant cet aéronef sur une trajectoire de chute libre, autrement dit en effectuant un vol balistique.

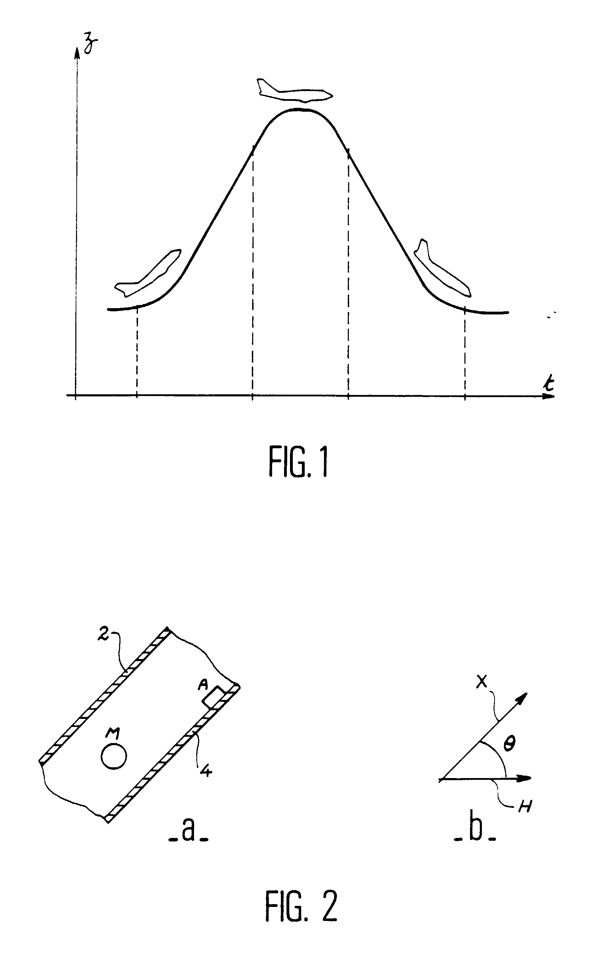

La figure 1 montre schématiquement une telle trajectoire z(t). A partir d'un vol en palier, l'aéronef est accéléré. Puis on lui impose une ressource d'entrée. La portance est ensuite annulée et la poussée réduite pour compenser la trainée. L'aéronef décrit alors une portion d'ellipse en toute théorie qui pourra être assimilée à une parabole. En fin de parabole, l'aéronef subit une ressource de sortie.

Pour éviter tout contact entre l'équipement où doivent être réalisées les expériences de microgravité et la carlingue de l'aéronef, il est connu de larguer l'équipement dans la carlingue au début de la phase parabolique pour le laisser ensuite évoluer en vol libre ("free-floating" en terminologie anglo-saxonne).

Pour adapter la trajectoire de l'aéronef, on envoie au pilote une information lui permettant de corriger le vol de telle sorte que l'équipement reste en vol libre. Une première solution est obtenue en filmant l'équipement et en affichant dans le poste de pilotage l'image de l'équipement. Le pilote est donc en mesure de corriger à tout moment la trajectoire de son appareil en fonction de la position instantanée de l'équipement.

Cette méthode est décrite, par exemple, dans EP-A-0 486 346. On détermine l'écart entre la position de la charge et celle de l'appareil et on pilote celui-ci de manière à maintenir cet écart à une valeur déterminée.

Avec cette méthode, le niveau de microgravité atteint dans ces vols ne tombe pas en dessous de $10^{-3}$ g, ce qui est souvent très insuffisant. De plus, cette méthode est instable du fait du temps de réponse de l'aéronef.

### Exposé de l'invention

La présente invention a justement pour but de remédier à ces inconvénients. A cette fin, elle propose un procédé de pilotage d'un aéronef qui permet de réaliser des séquences de vol libre d'au moins 10 secondes et d'atteindre des niveaux de microgravité bien meilleurs, de l'ordre de $10^{-4}$ à $10^{-6}$ g.

Ces buts sont atteints grâce à l'invention par un choix particulier de l'information envoyée au pilote aux fins de correction de la trajectoire. Cette information est la composante verticale de la position relative de l'équipement, composante non plus instantanée mais anticipée. Cette anticipation, qui, dans la pratique est de l'ordre de quelques secondes, permet au pilote d'anticiper sur la correction de la trajectoire. De cette manière, on s'affranchit du temps de réponse de l'aéronef et on évite certaines instabilités de pilotage.

De façon précise, la présente invention a donc pour objet un procédé de pilotage d'un aéronef pour améliorer un état de microgravité, procédé dans lequel :

- on donne à l'aéronef une trajectoire sensiblement balistique,
- on largue dans l'aéronef un équipement destiné à être mis en état de microgravité,
- on élabore une information à partir de la position occupée par cet équipement relativement à l'aéronef,
- on corrige la trajectoire de l'aéronef en fonction de cette information,

ce procédé étant caractérisé par le fait que l'on détermine la composante verticale de la position relative anticipée de l'équipement, le temps d'anticipation étant déterminé et réglable, et on corrige la trajectoire de l'aéronef en fonction de cette composante verticale.

Par ailleurs, on peut calculer la composante verticale de la position relative anticipée de l'équipement à partir des conditions de largage de cet équipement et des paramètres de vol de l'aéronef. De manière avantageuse, on peut en outre élaborer une deuxième information, qui est la composante longitudinale de la position relative anticipée de l'équipement. On peut également élaborer une troisième information, qui est la composante transversale de la position relative anticipée de l'équipement.

La présente invention n'est pas limitée au pilotage manuel d'un aéronef. Elle peut s'appliquer également au cas d'un pilotage automatique. Dans ce cas, l'information calculée, qui consiste selon l'invention en la composante verticale de la position anticipée, est comparée à une valeur de consigne et la différence entre l'information calculée et la consigne constitue un signal d'erreur, qui sert à corriger automatiquement la commande de l'aéronef.

La présente invention a également pour objet un système de pilotage qui met en oeuvre le procédé qui vient d'être défini. Ce système comprend :

- des moyens pour larguer dans l'aéronef un équipement destiné à être mis en état de microgravité,
- des moyens pour élaborer une information à partir de la position occupée par cet équipement relativement à l'aéronef et pour afficher cette information dans le poste de pilotage,

ce système étant caractérisé par le fait que les moyens pour élaborer l'information sont aptes à calculer la composante verticale de la position relative anticipée de l'équipement, le temps d'anticipation étant déterminé et réglable.

Dans les définitions qui précèdent, le terme "aéronef" s'applique à tout type d'appareils capables de se déplacer dans les airs, notamment à tout type d'avions.

Dans la suite de la description, et pour simplifier, on supposera que cet aéronef est un avion et que l'épuipement largué dans la carlingue est une plate-forme.

**Brève description des dessins**

- la figure 1, déjà décrite, représente la trajectoire d'un aéronef permettant de créer artificiellement un état de microgravité,
- la figure 2 définit schématiquement un repère par rapport à l'avion,
- la figure 3 montre des moyens de mise en oeuvre du procédé de l'invention,
- la figure 4 est un organigramme de calcul de l'information à transmettre.

**Exposé détaillé d'un mode de réalisation**

La figure 2 montre schématiquement, sur la partie a, les parois 2 et 4 de l'avion, une plate-forme M supposée circulaire et une platine accélérométrique A, solidaire de la paroi 4.

La partie b montre l'axe de référence longitudinal X, qui est l'axe de l'avion, lequel axe fait un angle $\theta$ avec l'horizon H. L'angle $\theta$ est l'assiette de l'avion.

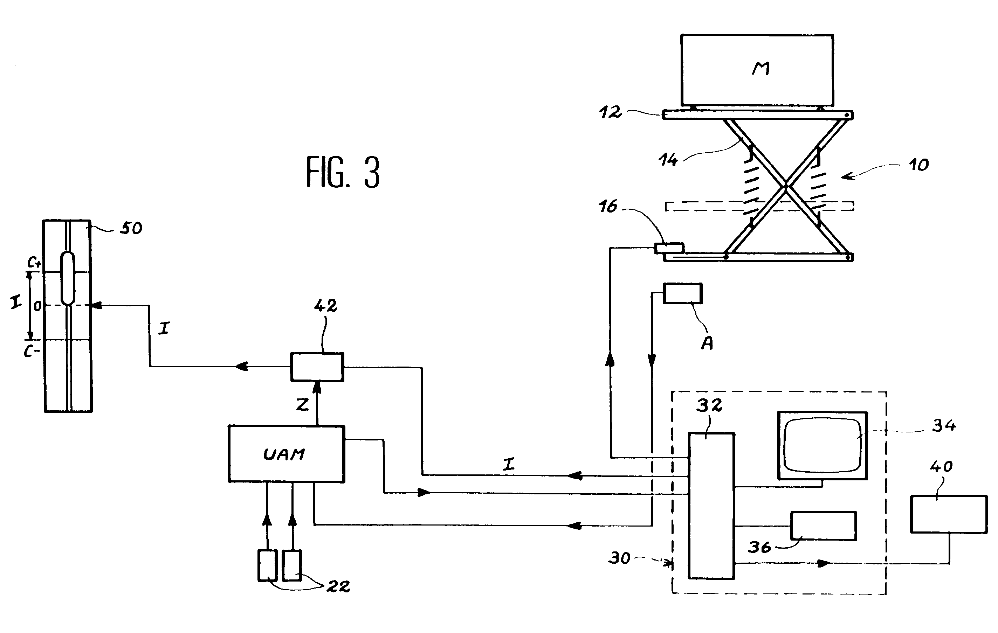

La figure 3 illustre un système permettant de mettre en oeuvre le procédé de l'invention. Il comprend tout d'abord un système mécanique de largage, référencé 10 qui est constitué par un plateau 12 supportant une plate-forme M, deux bras croisés et articulés 14 permettant de régler la position initiale de la plate-forme M et un dispositif d'éjection permettant de lui donner une vitesse initiale et un boîtier de commande 16.

Le système représenté comprend également une platine accélérométrique A (il peut y en avoir plusieurs).

Le système représenté comprend encore une unité d'acquisition mixte UAM reliée à divers capteurs 22 (blocs gyroscopiques, gyrométriques, etc...) et à la platine accélérométrique A. Il comprend encore un ordinateur 30, avec une unité de traitement 32, un écran 34 et un clavier 36. L'unité de traitement 32 reçoit un message de l'unité d'acquisition mixte UAM. Cette unité de traitement 32 comprend une carte d'acquisition des informations provenant de l'UAM : informations relatives à l'avion et à ses caractéristiques de pilotage, ainsi qu'une carte de conversion numérique-analogique qui délivre l'information calculée sous forme analogique ainsi qu'une carte numérique de commande du système de largage. Par ailleurs, l'ordinateur peut être relié à une imprimante 40.

En option, et à titre de sécurité, un sélecteur 42 possède deux entrées reliées respectivement à l'unité d'acquisition mixte UAM d'où il reçoit directement un signal d'accélération Z et à l'unité de traitement 32 d'où il reçoit soit de nouveau l'accélération Z soit l'information anticipée I. Ce sélecteur 42 possède une sortie qui véhicule soit l'accélération Z, soit l'information I.

Enfin, le système comprend un dispositif 50 qui affiche l'information I (ou Z). Ce dispositif est de préférence analogique et peut comporter des diodes luminescentes et deux curseurs C+, C-. L'information I ou l'accélération en Z (puisqu'il s'agit du même indicateur) apparaît alors comme une bande dont la hauteur indique la valeur. Tout autre dispositif de visualisation peut être envisagé.

Tout autre moyen d'affichage entre naturellement dans le cadre de l'invention. En particulier, des moyens de simulation ou des moyens d'affichage numérique ne sont pas exclus.

L'homme du métier saura calculer la position anticipée de la plate-forme M, soit à partir de mesures de positions, soit à partir de calculs. A titre purement explicatif, on va maintenant décrire comment l'unité de traitement 32 peut déterminer l'information anticipée. Les conventions utilisées sont les suivantes :

- l'indice "0" affecte une grandeur comptée par rapport à un repère terrestre,
- l'indice "av" affecte une grandeur comptée par rapport à un repère lié à l'avion,
- $\gamma$ désigne l'accélération, A la platine accélérométrique, M la plateforme, AM la distance de l'une à l'autre.

Lorsque la plateforme M est en vol libre, on peut écrire $\gamma_0(M) = g$.

De plus, on a :

$$\gamma_0(A) = g + n_0 g,$$

avec $n_0 = P(\theta) . n_{av}$,

où $P(\theta)$ est la matrice de passage du repère avion au repère terrestre, fonction de $\theta$,

$\theta$ est l'assiette de l'avion acquise en temps réel,

$n_{av}$ est le facteur de charge donné par la platine accélérométrique A acquis en temps réel.

D'où

$$\gamma_0(M) - \gamma_0(A) = -n_0 . g,$$

c'est-à-dire $(d^2(AM)/dt^2)_0 = n_0 . g$.

Soient X, Y, Z les coordonnées de AM et $n_x$, $n_y$, $n_z$ les coordonnées de n. On a par conséquent le système suivant :

$$X''_0(t) = -n_{x0}(t) . g,$$

$$Y''_0(t) = -y_{x0}(t) . g,$$

$$Z''_0(t) = -n_{z0}(t) . g.$$

En supposant que $n_{x0}$ et $n_{z0}$ restent constants pendant un pas de temps dt, on peut écrire :

$$X_0(t+dt) = X_0(t) + X'_0(t) . dt + 1/2 X''_0(t) . dt^2$$

puis

$$X'_0(t+dt) = X'_0(t) + X''_0(t) . dt,$$

$$Y_0(t+dt) = Y_0(t) + Y'_0(t) . dt + 1/2 Y''_0(t) . dt^2$$

puis

$$Y'_0(t+dt) = Y'_0(t) + Y''_0(t) . dt,$$

$$Z_0(t+dt) = Z_0(t) + Z'_0(t) . dt + 1/2 Z''_0(t) . dt^2$$

puis

$$Z'_0(t+dt) = Z'_0(t) + Z''_0(t) . dt.$$

On peut écrire alors :

$$AM_{av}(t+dt) = p^{-1}(\theta(d+dt)) . AM_0(t+dt)$$

avec :

$$\theta(t+dt)=\theta(t)+\theta'(t).dt,$$

où $\theta'$ est la vitesse de rotation de l'avion acquise en temps réel.

Cet algorithme permet d'obtenir ainsi la trajectoire de la plate-forme dans l'avion. Mais on pourrait en imaginer d'autres.

En supposant maintenant que $n_{x0}$, $n_{y0}$ et $n_{z0}$ restent constants pendant un temps $\Delta t$, on peut écrire :

$$X_0(t+\Delta t)=X_0(t) + X'_0(t).\Delta t+1/2X''_0(t).\Delta t^2,$$

$$Y_0(t+\Delta t)=Y_0(t) + Y'_0(t).\Delta t+1/2Y''_0(t).\Delta t^2,$$

$$Z_0(t+\Delta t)=Z_0(t) + Z'_0(t).\Delta t+1/2Z''_0(g).\Delta t^2.$$

On écrit alors :

$$AM_{av}(t+\Delta t)=P^{-1}(\theta(t+\Delta t)).AM_0(t+\Delta t)$$

avec

$$\theta(t+\Delta t) = \theta(t) + \theta'(t).\Delta t.$$

On obtient ainsi la position relative anticipée de la plate-forme. Là encore, d'autres algorithmes sont possibles.

L'information anticipée envoyée au pilote est $Zav(t+\Delta t)$.

Les conditions initiales sont $AM_0(t_0)$ et $(d(AM)/dt)_0(t_0)$.

On peut écrire :

$$AM_0(t_0)=P(\theta(t_0)).AM_{av}(t_0)$$

avec $AM_{av}(t_0)$ : position relative initiale à la plate-forme,
et

$$(d(AM)/dt)_0(t_0)=V_0(M)(t_0)-V_0(A)(t_0) =$$

$$Vrel_0(M)(t_0) + \omega_0(t_0) \wedge AM_0(t_0),$$

où

$$Vrel_0(M)(t_0)=P(\theta(t_0)).Vrel_{av}(M)(t_0)$$

avec $Vrel_{av}(M)(t_0)$ : vitesse d'éjection de la plate-forme, et $\omega_0(t_0)=(0, \theta'(t_0), 0)$.

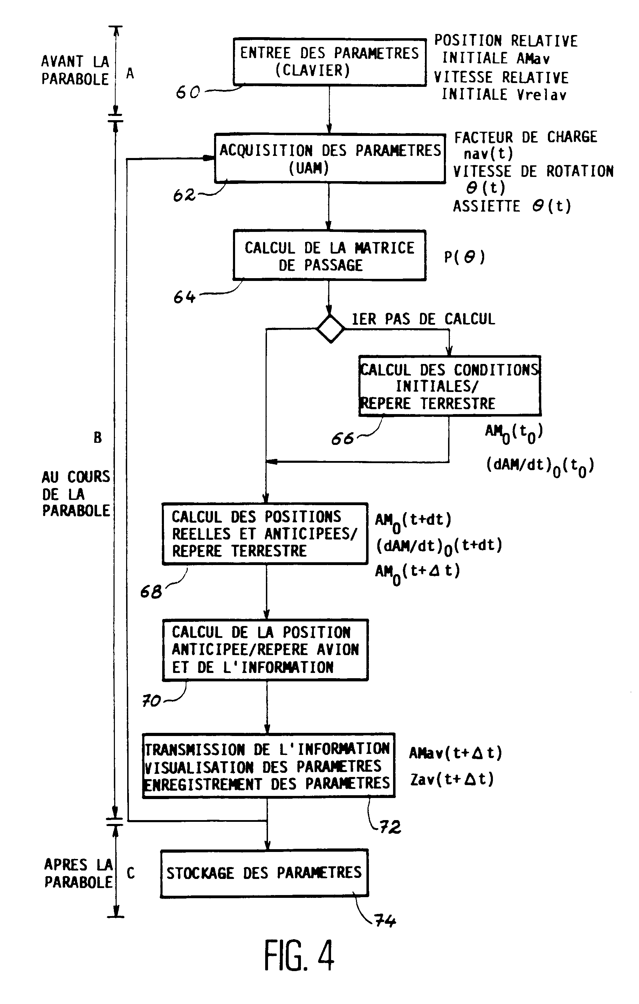

La figure 4, enfin, est un organigramme de calcul de l'information $Z_{av}(t+\Delta t)$ selon le processus qui vient d'être décrit. La signification des différents blocs est la suivante :

60 : entrée des paramètres (clavier),
62 : acquisition des paramètres (UAM),
64 : calcul de la matrice de passage,

66 : calcul des conditions initiales/repère terrestre,

68 : calcul des positions réelles et anticipées/repère terrestre,

70 : calcul de la position anticipée/repère avion et de l'information,

72 : transmission de l'information, visualisation des paramètres, enregistrement des paramètres,

74 : stockage des paramètres.

La phase A précède le vol parabolique, la phase B correspond au vol parabolique, la phase C suit le vol parabolique.

Dans la description qui précède, les diverses informations sont véhiculées de manière traditionnelle par des signaux électriques circulant dans des conducteurs. On ne sortirait pas du cadre de l'invention en utilisant des moyens de transmission de données sans fil (moyens hertziens, par infrarouge, etc...), notamment entre la plate-forme et l'unité de traitement. En équipant ainsi la plate-forme il est possible de connaître son accélération. On obtient ainsi une meilleure précision de la trajectoire.

On peut également déterminer le facteur de charge $n_{av}$ avec anticipation (quelques secondes) en fonction de la commande de profondeur, compte tenu du temps de réponse de l'aéronef.

On peut encore, selon l'invention, munir le système de moyens de compensation de la vitesse de rotation initiale de la plate-forme.

On peut enfin donner au pilote une autre information pour qu'il puisse donner à l'avion une trajectoire apte à ramener la plate-forme à une position donnée, de manière amortie.

## Revendications

1. Procédé de pilotage d'un aéronef pour améliorer un état de microgravité, procédé dans lequel :

   - on donne à l'aéronef une trajectoire sensiblement balistique,
   - on largue dans l'aéronef un équipement destiné à être mis en état de microgravité,
   - on élabore une information à partir de la position occupée par cet équipement relativement à l'aéronef,
   - on corrige la trajectoire de l'aéronef en fonction de cette information,

   ce procédé étant caractérisé par le fait que l'on détermine la composante verticale ($z_{av}(t+\Delta t)$) de la position relative anticipée de l'équipement (M), le temps d'anticipation ($\Delta t$) étant déterminé et réglable et on corrige la trajectoire de l'aéronef en fonction de cette composante verticaie.

2. Procédé selon la revendication 1, caractérisé par le fait que l'on calcule la composante verticale de la position relative anticipée de l'équipement à partir des conditions de largage de cet équipement et des paramètres de vol de l'aéronef.

3. Procédé selon la revendication 1, caractérisé par le fait que qu'on élabore en outre une deuxième information qui est la composante longitudinale de la position relative anticipée de l'équipement.

4. Procédé selon la revendication 1, caractérisé par le fait qu'on élabore en outre une troisième information qui est la composante transversale de la position relative anticipée de l'équipement.

5. Procédé selon l'une quelconque des revendications 1 à 4, caractérisé par le fait que la correction de la trajectoire de l'aéronef est effectuée par le pilote de l'aéronef.

6. Procédé selon l'une quelconque des revendications 1 à 4, caractérisé par le fait que la correction de la trajectoire de l'aéronef s'effectue automatiquement.

7. Procédé selon l'une quelconque des revendications 1 à 6, caractérisé par le fait que le temps d'anticipation ($\Delta t$) est de quelques secondes.

8. Système de pilotage pour la mise en oeuvre du procédé selon l'une quelconque des revendications 1 à 6, comprenant :

   - des moyens (10) pour larguer dans l'aéronef un équipement (M) destiné à être mis en état de microgravité,
   - des moyens pour élaborer une information à partir de la position occupée par cet équipement (M) relativement à l'aéronef et pour afficher cette information dans le poste de pilotage,

ce système étant caractérisé par le fait que les moyens (30, UAM) pour élaborer l'information sont aptes à calculer la composante verticale ($Z_{av}$(t+$\Delta$t)) de la position relative anticipée de l'équipement (M), le temps d'anticipation ($\Delta$t) étant déterminé et réglable.

9. Système selon la revendication 8, caractérisé par le fait que lesdits moyens pour élaborer l'information comprennent au moins une platine accélérométrique (A), une unité d'acquisition mixte (UAM) reliée à divers capteurs (22) et à la platine accélérométrique (A), un ordinateur (30) comprenant une unité de traitement (32) reliée à l'unité d'acquisition mixte (UAM), un organe d'affichage (50) relié à l'unité de traitement (32).

**Patentansprüche**

1. Steuerverfahren eines Flugzeugs um einem MikroschwerkraftZustand zu verbessern, die folgenden Schritte umfassend:

   - man läßt das Flugzeug eine im wesentlichen ballistische Flugbahn ausführen,
   - man wirft in dem Flugzeug ein Gerät ab, das in den Mikroschwerkraftzustand versetzt werden soll,
   - man erarbeitet auf Grund der Lage, die dieses Gerät bezüglich des Flugzeugs einnimmt, eine Information,
   - man korrigiert die Flugbahn des Flugzeugs in Abhängigkeit von dieser Information,

   **dadurch gekennzeichnet**,
   daß man die Vertikalkomponente ($Z_{av}$(t+$\Delta$t)) der antizipierten relativen Lage bzw. Winkellage des Geräts (M) bestimmt, wobei die Antizipationszeit ($\Delta$t) festgelegt und einstellbar ist und man die Bahn des Flugzeugs in Abhängigkeit von dieser Vertikalkomponente korrigiert.

2. Verfahren nach Anspruch 1, dadurch gekennzeichnet, daß man die Vertikalkomponente der antizipierten relativen Lage des Geräts berechnet auf Grund der Abwurfbedingungen dieses Geräts und der Flugparameter des Flugzeugs.

3. Verfahren nach Anspruch 1, dadurch gekennzeichnet, daß man außerdem eine zweite Information erarbeitet, die die Längskomponente der antizipierten relativen Lage des Geräts ist.

4. Verfahren nach Anspruch 1, dadurch gekennzeichnet, daß man außerdem eine dritte Information erarbeitet, die die Querkomponente der antizipierten relativen Lage des Geräts ist.

5. Verfahren nach einem der Ansprüche 1 bis 4, dadurch gekennzeichnet, daß die Korrektur der Bahn des Flugzeugs durch den Piloten des Flugzeugs ausgeführt wird.

6. Verfahren nach einem der Ansprüche 1 bis 4, dadurch gekennzeichnet, daß die Korrektur der Bahn des Flugzeugs automatisch erfolgt.

7. Verfahren nach einem der Ansprüche 1 bis 6, dadurch gekennzeichnet, daß die Antizipationszeit ($\Delta$t) einige Sekunden beträgt.

8. Steuersystem für die Anwendung des Verfahrens nach einem der Ansprüche 1 bis 6, umfassend:

   - Einrichtungen (10) zum Abwerfen - im Flugzeug - eines Geräts, das in den Mikroschwerkraftzustand versetzt werden soll,
   - Einrichtungen zum Erarbeiten einer Information auf Grund der Lage, die dieses Gerät im Verhältnis zum Flugzeug einnimmt, und um diese Information im Cockpit anzuzeigen,

   wobei dieses System dadurch gekennzeichnet ist, daß die Einrichtungen (30, UAM) zum Erarbeiten der Information imstande sind, die Vertikalkomponente ($Z_{av}$(t+$\Delta$t)) der antizipierten relativen Lage des Geräts (M) zu berechnen und dabei die Antizipationszeit ($\Delta$t) festgelegt und einstellbar ist.

9. System nach Anspruch 8, dadurch gekennzeichnet, daß die genannten Einrichtungen zum Erarbeiten der Information wenigstens eine Beschleunigungsmeßplatine (A) und eine mit den diversen Meßgebern (22) und der Beschleunigungsplatine (A) verbundene kombinierte Erfassungseinheit (UAM) enhält sowie einen Computer (30), eine Verarbeitungseinheit (32) umfassendend, verbunden mit der kombinierten Erfassungseinheit (UAM), und ein Anzeigeorgan (50), verbunden mit der Verarbeitungseinrichtung (32).

## Claims

1. Process for piloting an aircraft in order to improve a microgravity state, in which:

   - the aircraft is given a substantially ballistic trajectory,
   - within the aircraft an equipment to be placed in a microgravity state is released,
   - an information is processed on the basis of the position occupied by said equipment relative to the aircraft,
   - the aircraft trajectory is correct as a function of this information, said process being characterized in that the information processed is the vertical component ($Z_{av}(t+\Delta t)$) of the anticipated relative position of the equipment (M), the anticipation time ($\Delta t$) being determined and regulatable and the aircraft trajectory is corrected as a function of said vertical component.

2. Process according to claim 1, characterized in that the vertical component of the anticipated relative position of the equipment is calculated on the basis of the release conditions of this equipment and aircraft flight parameters.

3. Process according to claim 1, characterized in that also a second information is processed, which is the longitudinal component of the anticipated relative position of the equipment.

4. Process according to claim 1, characterized in that also a third information is processed, which is the transverse component. of the anticipated relative position of the equipment.

5. Process according to any one of the claims 1 to 4, characterized in that the correction of the trajectory of the aircraft is performed by the aircraft pilot.

6. Process according to any one of the claims 1 to 4, characterized in that the correction of the trajectory of the aircraft takes place automatically.

7. Process according to any one of the claims 1 to 5, characterized in that the anticipation time ($\Delta t$) is a few seconds.

8. System of piloting for performing the process according to any one of the claims 1 to 6, comprising:

   - means (10) for releasing in the aircraft an equipment (M) to be brought into a microgravity state,
   - means for processing an information on the basis of the position occupied by said equipment (M) relative to the aircraft and for displaying said information in the cockpit,

   said system being characterized in that means (30, MAU) for processing the information are able to calculate the vertical component ($Z_{av}(t+\Delta t)$) of the anticipated relative position of the equipment (M), the anticipation time ($\Delta t$) being determined and regulatable.

9. System according to claim 8, characterized in that the means for processing the information comprise at least one accelerometric plate (A), a mixed acquisition unit (MAU) connected to various sensors (22) and to the accelerometric plate (A), a computer (30) incorporating a processing unit (32) connected to the mixed acquisition unit (MAU) and a display member (50) connected to the processing unit (32).

FIG. 1

_a_

_b_

FIG. 2

# FIG. 3

AVANT LA PARABOLE | A

ENTREE DES PARAMETRES
(CLAVIER)

60

POSITION RELATIVE
INITIALE AMav
VITESSE RELATIVE
INITIALE Vrelav

ACQUISITION DES PARAMETRES
(UAM)

62

FACTEUR DE CHARGE
nav(t)
VITESSE DE ROTATION
$\theta$(t)
ASSIETTE $\theta$(t)

CALCUL DE LA MATRICE
DE PASSAGE

64

P($\theta$)

IER PAS DE CALCUL

B

AU COURS
DE LA
PARABOLE

CALCUL DES CONDITIONS
INITIALES/
REPERE TERRESTRE

66

$AM_0(t_0)$

$(dAM/dt)_0(t_0)$

CALCUL DES POSITIONS
REELLES ET ANTICIPEES/
REPERE TERRESTRE

68

$AM_0(t+dt)$
$(dAM/dt)_0(t+dt)$
$AM_0(t+\Delta t)$

CALCUL DE LA POSITION
ANTICIPEE/REPERE AVION
ET DE L'INFORMATION

70

TRANSMISSION DE L'INFORMATION
VISUALISATION DES PARAMETRES
ENREGISTREMENT DES PARAMETRES

72

$AMav(t+\Delta t)$

$Zav(t+\Delta t)$

APRES LA PARABOLE | C

STOCKAGE DES PARAMETRES

74

FIG. 4